# EUROPÄISCHE PATENTSCHRIFT

(11) **EP 2 315 687 B1**
(45) Veröffentlichungstag und Bekanntmachung des Hinweises auf die Patenterteilung: **26.12.2012**
(21) Anmeldenummer: 09781021.2
(22) Anmeldetag: 24.07.2009
(51) Int. Cl.: B60S 1/38, B60S 1/40

(54) **WISCHBLATT MIT EINEM ANSCHLUSSELEMENT**
WIPER BLADE HAVING A CONNECTING ELEMENT
BALAI D'ESSUIE-GLACE AVEC UN ELEMENT DE RACCORD

(30) Priorität: 21.08.2008 DE 102008041405
(43) Veröffentlichungstag der Anmeldung: 04.05.2011
(73) Patentinhaber: Robert Bosch GmbH, 70442 Stuttgart (DE)
(72) Erfinder: OP'T ROODT, Inigo, B-3500 Hasselt (BE); DEPONDT, Helmut, B-3001 Heverlee (BE); JANSSIS, Yves, B-3800 Sint-Truiden (BE); HERINCKX, Dirk, B-3350 Dries-Linter (BE)
(86) Internationale Anmeldenummer: PCT/EP2009/059545
(87) Internationale Veröffentlichungsnummer: WO 2010/020517

(56) Entgegenhaltungen:
- DE-A1- 19 859 077
- DE-A1-102005 062 463
- DE-A1-102006 031 514
- DE-A1-102006 038 828
- JP-A- 2003 312 451

## Beschreibung

### Stand der Technik

Die Erfindung geht von einem Wischblatt mit einem Anschlusselement nach dem Oberbegriff des Anspruchs 1 aus.

Aus der DE 10 2006 031 514 A1 ist ein Wischblatt mit einem Anschlusselement zum gelenkigen Verbinden des Wischblatts mit einem Wischarm bekannt. Das Anschlusselement umfasst ein Grundelement, das aus zwei Seitenteilen besteht und quer zu einer Längsrichtung des Wischblatts zusammengefügt wird. Dazu dienen einander zugewandte Zentriermittel in Form von Vorsprüngen des einen Seitenteils, die in entsprechende Aussparungen des anderen Seitenteils passen. In montiertem Zustand fixieren die Vorsprünge in den Aussparungen die Seitenteile in Längsrichtung zueinander und definieren den Abstand von Längsnuten quer zum Wischblatt. In den Längsnuten verlaufen als Tragelement dienende Federschienen, wobei in den Längsnuten Nocken vorgesehen sind, die in Aussparungen der Federschienen eingreifen und das Anschlusselement in Längsrichtung relativ zu den Federschienen fixieren.

Seitlich der Vorsprünge und der Aussparungen sind an den Seitenteilen Anlageflächen vorgesehen, die mit Anlageflächen an dem jeweils anderen Seitenteil zusammenwirken. Die Anlageflächen verlaufen geneigt zum oberen Schenkel der Längsnut und sind in Längsrichtung abwechselnd der Längsnut zugewandt oder abgewandt. In montiertem Zustand fixieren die Anlageflächen die Seitenteile in beiden Richtungen der Hochachse. Die Anlageflächen können auch in einer Querebene angeordnet sein, wobei zwei Anlageflächen paarweise eine konkave oder konvexe Dachfläche bilden, die zu einer entsprechenden Dachfläche eines anderen Paares von Anlageflächen des jeweils anderen Seitenteils passt.

Ferner sind am oberen Schenkel der Längsnuten der Seitenteile quer zur Längsrichtung verlaufende Rasthaken angeordnet, die in Rastvertiefungen des anderen Seitenteils eingreifen und die Seitenteile des Grundelements provisorisch zusammenhalten. Die beiden Seitenteile des Grundelements werden endgültig durch eine Blechkralle zusammengehalten, die mit ihrem Boden die Seitenteile überdeckt und außen quer zur Längsrichtung durch Seitenführungen führt. Diese sind von den Längsseiten des Bodens zu unteren Schenkeln der Seitenteile abgewinkelt, wobei in Längsrichtungen an den Seitenführungen angeformte Laschen seitliche Nocken, die an den Außenseiten der Seitenteile angeordnet sind, an der dem Boden abgewandten Seite zumindest teilweise untergreifen. Die Laschen werden während der Montage unter die Nocken gebogen, sodass die Blechkralle die Seitenteile des Grundelements zusammenhält und durch die Laschen in Richtung der Hochachse gesichert ist.

### Offenbarung der Erfindung

Nach der Erfindung ist das Gelenkelement, das eine Nabe, einen Gelenkbolzen oder Gelenkzapfen umfasst, eine Adapterkappe aus Kunststoff, die an den Innenseiten ihrer Seitenwände Klippse aufweist. Diese greifen im montierten Zustand in Nischen an den äußeren Längsseiten der Seitenteile ein. Die Adapterkappe kann einfach in einem Spritzgießverfahren hergestellt werden und ist leicht ohne zusätzliche Werkzeuge schnell zu montieren, indem sie auf das Grundelement aufgeklippst wird. Ferner hat die Adapterkappe zwei Funktionen. Zum einen trägt sie die Nabe oder den Gelenkbolzen bzw. die Gelenkzapfen und zum anderen schützt sie das Anschlusselement gegen äußere Einflüsse, wobei sie dem Wischblatt ein harmonisches Design verleiht.

Die Klippverbindung kann sehr kräftig ausgebildet werden. Hierzu wird gemäß einer Ausgestaltung vorgeschlagen, dass die Seitenteile am Rand der Nischen Verstärkungen aufweisen, die teilweise in Ausnehmungen der Seitenwände der Abdeckkappe oberhalb der Klippse ragen. Dadurch ergibt sich bei geringem Bauraumbedarf eine große Überdeckung der Klippse mit den Nischen, sodass sich diese nicht unbeabsichtigt lösen können.

Die Seitenteile des Grundelements werden durch die Seitenwände der Adapterkappe sicher zusammengehalten. Dies kann um so mehr gewährleistet werden, wenn die Seitenwände zwischen den Klippsen und der Nabe durch Querwände miteinander verbunden sind. Dadurch ergibt sich eine sehr steife Konzeption. Die Klippse lassen sich dennoch leicht montieren, da die Adapterkappe an ihren Stirnseiten Anschlussprofile für Spoilerteile besitzt, die eine gewisse Nachgiebigkeit quer zur Längsrichtung des Wischblatts haben.

Die Adapterkappe wird zweckmäßigerweise in Längsrichtung relativ zum Grundelement fixiert, indem sie eine quer verlaufende Nabe oder ein vergleichbares Bauelement besitzt, dass an seinem äußeren Umfang zum Grundelement hin zwei Vertiefungen hat, in die Zentriernocken des Grundelements eingreifen. Zwischen den Vertiefungen wird gemäß einer Ausgestaltung der Erfindung ein Drucksteg an der Nabe vorgesehen, der im montierten Zustand auf Druckpunkte an einander zugewandten Laschen der Seitenteile des Grundelements drückt. Dabei werden die Laschen gegen eine Kopfleiste einer Wischleiste des Wischblatts gedrückt und diese damit relativ zum Anschlusselement und zu den Federschienen fixiert.

Wenn die Adapterkappe eine Nabe aufweist, die zum Anschluss eines Wischarms nach dem Sidelock-Prinzip dient, ist es zweckmäßig, dass in Längsrichtung zu beiden Seiten der Nabe Nischen in den Seitenwänden der Adapterkappe vorgesehen sind. In die Nischen greift ein abgewinkeltes Ende einer Brücke des Wischarms in der Betriebsstellung ein. Somit ist die relative seitliche Position zwischen Wischblatt und Wischarm in der Betriebsstellung verriegelt. Dabei ist es zweckmäßig, dass zwischen dem abgewinkelten Ende der Brücke und der Nische kleine reibungsarme Kontaktflächen in Form von Rippen vorgesehen werden.

### Kurze Beschreibung der Zeichnungen

Weitere Vorteile ergeben sich aus der folgenden Zeichnungsbeschreibung. In der Zeichnung ist ein Ausführungsbeispiel der

Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines erfindungsgemäßen Wischblatts im Bereich eines Anschlusselements,
- Fig. 2: eine perspektivische Ansicht eines Wischblatts nach Fig. 1 zu Beginn der Montage des Anschlusselements,
- Fig. 3: eine perspektivische Ansicht eines Wischblatts nach Fig. 1 beim zweiten Montageschritt des Anschlusselements,
- Fig. 4: einen Querschnitt entsprechend der Linie IV-IV in Fig. 1,

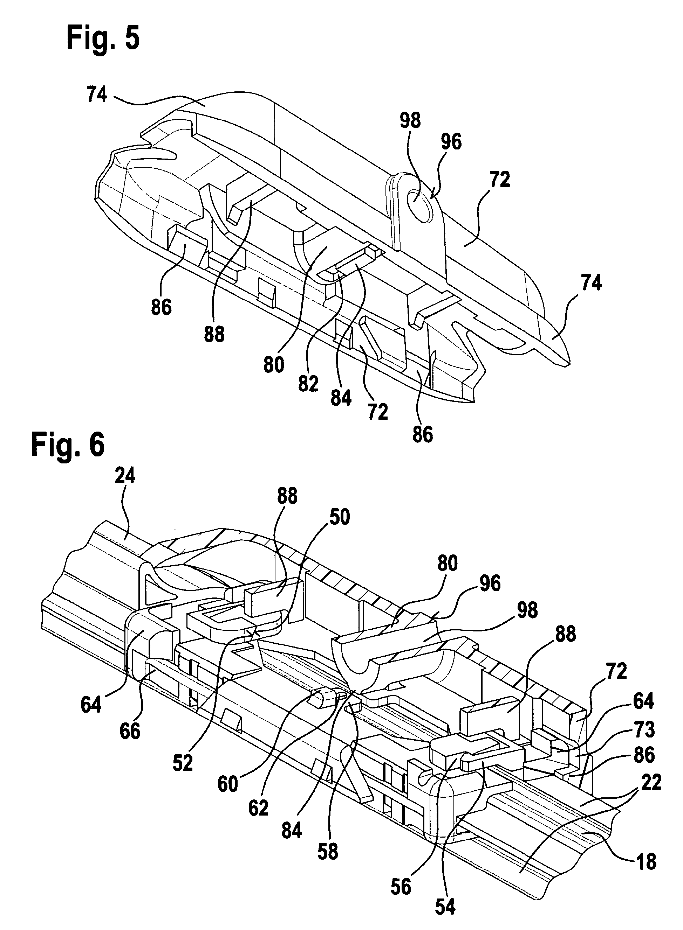

- Fig. 5: eine perspektivische Ansicht einer Adapterkappe des Anschlusselements von unten und
- Fig. 6: eine perspektivische Ansicht eines Wischblatts mit einer durch eine Lagerachse und eine Längsmittelebene geschnittenen Adapterkappe.

### Ausführungsformen der Erfindung

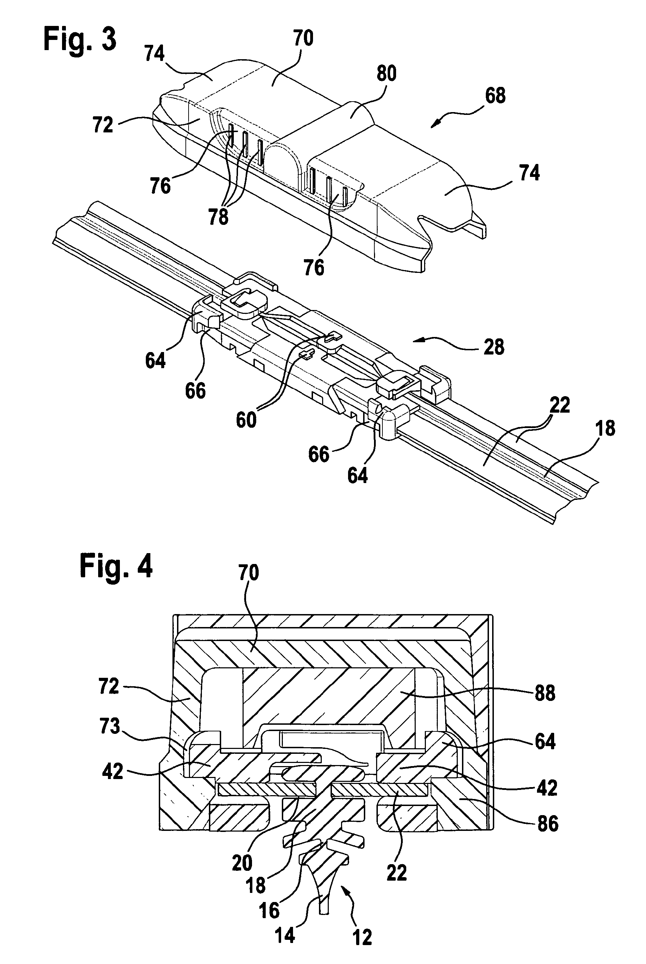

Ein Wischblatt 10 umfasst eine Wischleiste 12 mit einer Wischlippe 14, die über einen Kippsteg 16 mit einer Kopfleiste 18 verbunden ist (Fig. 4). Die Kopfleiste 18 weist zwei Längsnuten 20 auf, in die als Tragelement Federschienen 22 eingesetzt sind. Diese ragen seitlich ein Stück weit aus den Längsnuten 20 heraus und tragen in diesen Bereichen Spoilerteile 24 sowie ein Anschlusselement 26, das zwischen den Spoilerteilen 24 auf den Federschienen 22 fixiert ist. Das Anschlusselement 26 besitzt an seinen Stirnseiten Übergangsprofile 74, mit denen es die Spoilerteile 24 ein Stück weit überlappt.

Das Anschlusselement 26 umfasst ein Grundelement 28 und ein Gelenkelement, das als Adapterkappe 68 ausgebildet ist. Das Grundelement 28 hat zwei Seitenteile 30, 32. Diese umfassen mit Längsnuten 34 die aus den Längsnuten 20 der Kopfleiste 18 seitlich vorstehenden Teile der Federschienen 22. In den Längsnuten sind Nocken 36 vorgesehen, die in Aussparungen 38 der Federschienen 22 eingreifen und somit das Grundelement 28 in Längsrichtung 40 relativ zu den Federschienen 22 fixieren.

Die Längsnut 34 wird von einem oberen Schenkel 42 und von einem unteren Schenkel 44 begrenzt. Die oberen Schenkel 42 der Seitenteile 30, 32 haben an den einander zugewandten Längsseiten, zweckmäßigerweise in der Nähe ihrer Enden, Vorsprünge 46, die in entsprechende Aussparungen 48 des jeweils anderen Teils 30, 32 passen. Somit sind die Seitenteile 30, 32 identisch, wodurch sich eine geringe Teilevielzahl ergibt.

In der Nähe der Vorsprünge 46 und der Aussparungen 48 sind Anlageflächen 50 bzw. 52 angeordnet. Die Anlageflächen 52 bilden paarweise eine konvexe Dachform, die in Längsrichtung 40 des Wischblatts 10 verläuft und zu den Anlageflächen 50 passen, die eine konkave Dachform bilden. Somit sind die Seitenteile 30, 32 in Richtung einer Hochachse, die senkrecht zur Längsrichtung 40 und zur Ebene der Federschienen 22 verläuft, gegenseitig fixiert.

Die Seitenteile 30, 32 werden vorläufig bei der Montage durch eine Klippverbindung zusammengehalten, die Rasthaken 54 umfasst. Diese rasten bei der Montage in Rastvertiefungen 56 des jeweils anderen Seitenteils 30, 32 ein. Die Seitenteile 30, 32 werden endgültig seitlich zusammengehalten durch eine Adapterkappe 68, deren Seitenwände 72 die Seitenteile 30, 32 umfassen. Eine Deckwand 70 verbindet die Seitenwände 72. Klippse 86 an den Innenseiten der Seitenwände 72 rasten bei der Montage in Nischen 66 an den Außenseiten der Seitenteile 30, 32 ein. Am Rand der Nischen 66, die zweckmäßigerweise an den Enden der Seitenteile 30, 32 angeordnet sind, sind Verstärkungen 64 vorgesehen, die einen guten Halt für die Klippse 86 bilden. Die Verstärkungen 64 ragen bis in Aussparungen 73 der Seitenwände 72, sodass bei geringem Raumbedarf eine feste Klippverbindung entsteht.

Im mittleren Bereich der Seitenteile 30, 32 ist an den oberen Schenkeln 42 der Längsnuten 20 zur Adapterkappe 68 hin ein Zentriernocken 60 vorgesehen, der in entsprechende Vertiefungen 82 der Adapterkappe 68 eingreift. Die Vertiefungen 82 sind an der Unterseite einer Nabe 80 vorgesehen, die quer verlaufend zur Längsrichtung 40 die Seitenwände 72 der Adapterkappe 68 verbindet. Zwischen den Vertiefungen 82 befindet sich ein Drucksteg 84, der in montiertem Zustand der Adapterkappe 68 über Druckpunkte 62 der Seitenteile 30, 32 gegen die Kopfleiste 18 der Wischleiste 12 drückt. Die Druckpunkte 62 befinden sich in der Nähe der Zentriernocken 60 und sind an Laschen 58 angeformt, die einander gegenüberliegend an den oberen Schenkeln 42 der Seitenteile 30, 32 angeordnet sind. Zur Versteifung der Adapterkappe 68 sind zweckmäßigerweise zwischen den Klippsen 86 und der Nabe 80 Querwände 88 vorgesehen, die an den Seitenwänden 72 der Adapterkappe 68 angeformt sind.

Die Adapterkappe 68 nach dem Ausführungsbeispiel besitzt als Gelenkteil die Nabe 80. Es ist jedoch auch möglich, dass die Adapterkappe 68 als Gelenkteile Zapfen oder einen Gelenkbolzen besitzt. Die Adapterkappe 68 übt damit zwei Funktionen aus, nämlich das Gelenkteil, die Nabe 80, mit dem Wischblatt 10 zu verbinden und zum anderen in einem harmonischen Design die Verbindungsteile nach außen zu schützen.

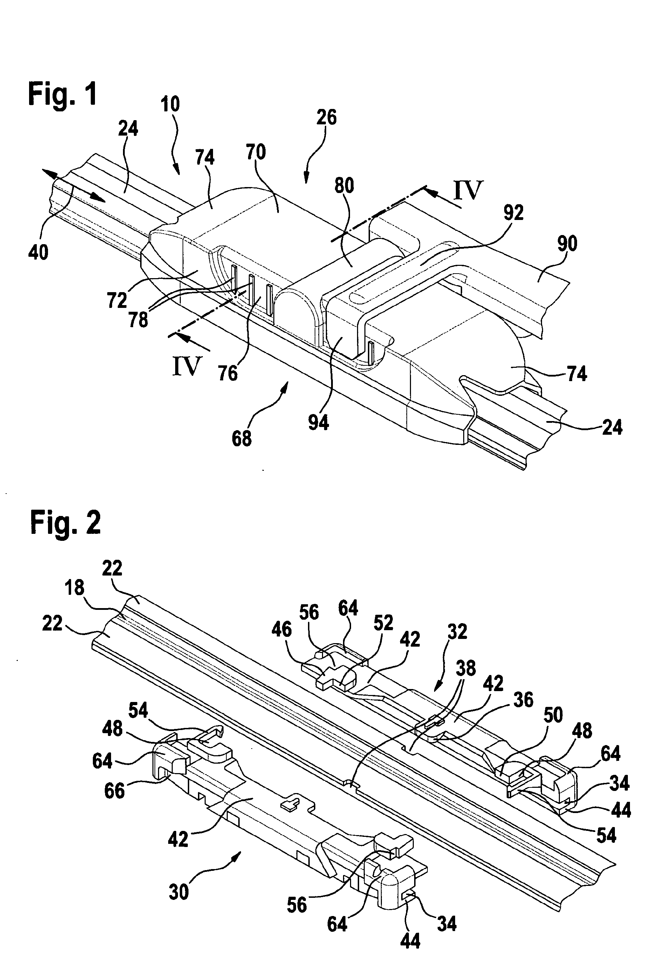

Das Ausführungsbeispiel zeigt eine Adapterkappe 68 mit der Nabe 80, um das Wischblatt 10 nach dem Sidelock-Prinzip mit einem Wischarm zu verbinden, von dem nur ein Verbindungselement 90 dargestellt ist. Zur Aufnahme eines nicht sichtbaren Lagerstifts besitzt die Nabe 80 eine Lagerbohrung 98. Ferner steht sie ein wenig zum Verbindungselement 90 vor und besitzt an der vorstehenden Stirnseite eine Anlauffläche 96 für das Verbindungselement 90. In den Seitenwänden 72 der Adapterkappe 68 sind Nischen 76 vorgesehen. Sie dienen zur Aufnahme eines abgewinkelten Endes 94 einer Brücke 92, die parallel zur Nabe 80 und zur Antriebsseite des Verbindungselements 90 versetzt verläuft und mit dem Verbindungselement 90 verbunden ist. In der Betriebsposition des Wischarms (Fig. 1) sichert die Brücke 92 mit dem abgewinkelten Ende 94 die seitliche Position des Wischblatts 10 relativ zum Wischarm. Um die erforderlichen Toleranzen leichter einhalten zu können und die Anlage zwischen dem abgewinkelten Ende 94 und der Adapterkappe 68 zu verbessern, sind in der Nische flache, schmale Rippen 78 angeordnet.

## Patentansprüche

1. Wischblatt (10) mit einem Anschlusselement (26), das ein Grundelement (28) und ein Gelenkelement (68) umfasst, wobei das Grundelement (28) ein erstes Seitenteil (30) und ein zweites Seitenteil (32) besitzt, die quer zu einer Längsrichtung (40) zusammengefügt sind, indem Rastmittel (54, 56) und Zentriermittel (46, 48, 50, 52) ineinander greifen, und die durch Seitenwände (72) des Gelenkelements (68) zusammengehalten werden, **dadurch gekennzeichnet, dass** das Gelenkelement (68) eine Adapterkappe (68) aus Kunststoff ist, die an den Innenseiten ihrer Seitenwände (72) Klippse (86) aufweist, die im montierten Zustand in Nischen (66) an den äußeren Längsseiten der Seitenteile (30, 32) eingreifen.

2. Wischblatt (10) nach Anspruch 1, **dadurch gekennzeichnet, dass** die Seitenteile (30, 32) im Bereich der Nischen (66) Verstärkungen (64) aufweisen, die sich von den Klippsen (86) abgewandt erstrecken und teilweise in Ausnehmungen (73) der Seitenwände (72) der Adapterkappe (68) oberhalb der Klippse (86) ragen.

3. Wischblatt (10) nach einem der Ansprüche 1 oder 2, **dadurch gekennzeichnet, dass** die Seitenwände (72) der Adapterkappe (68) zwischen einem Gelenkteil (80) und den Klippsen (86) durch Querwände (88) miteinander verbunden sind.

4. Wischblatt (10) nach einem der vorhergehenden Ansprüche, **dadurch gekennzeichnet, dass** die Adapterkappe (68) als Gelenkteil eine quer verlaufende Nabe (80) besitzt, die an ihrem äußeren Umfang zum Grundelement (28) zwei Vertiefungen (82) hat, in die Zentriernocken (60) des Grundelements (28) eingreifen.

5. Wischblatt (10) nach Anspruch 4, **dadurch gekennzeichnet, dass** die Seitenteile (30, 32) im Bereich der Zentriernocken (60) einander zugewandte Laschen (58) besitzen, die auf der der Nabe (80) zugewandten Seite Druckpunkte (62) haben, über die im montierten Zustand ein Drucksteg (84), der zwischen den Vertiefungen (82) an der Nabe (80) vorgesehen ist, die Laschen (58) gegen eine Kopfleiste (18) einer Wischleiste (12) drückt.

6. Wischblatt (10) nach einem der vorhergehenden Ansprüche, **dadurch gekennzeichnet, dass** die Adapterkappe (68) in Längsrichtung (40) symmetrisch zur Nabe (80) in ihren Seitenwänden (72) Nischen (76) besitzt für ein abgewinkeltes Ende (94) einer Brücke (92) eines Verbindungselements (90).

7. Wischblatt (10) nach Anspruch 6, **dadurch gekennzeichnet, dass** in den Nischen (76) der Adapterkappe (68) Rippen (78) vorgesehen sind.

## Claims

1. Wiper blade (10) having a connection element (26) which comprises a base element (28) and a joint element (68), wherein the base element (28) has a first side part (30) and a second side part (32) which are joined together transversely with respect to a longitudinal direction (40) by virtue of detent means (54, 56) and centring means (46, 48, 50, 52) engaging into one another and which are held together by side walls (72) of the joint element (68), **characterized in that** the joint element (68) is an adapter cap (68) which is composed of plastic and which, on the inner sides of its side walls (72), has clips (86) which, in the mounted state, engage into recesses (66) on the outer longitudinal sides of the side parts (30, 32).

2. Wiper blade (10) according to Claim 1, **characterized in that** the side parts (30, 32) have, in the region of the recesses (66), reinforcements (64) which extend so as to face away from the clips (86) and which project partially into recesses (73) of the side walls (72) of the adapter cap (68) above the clip (86).

3. Wiper blade (10) according to either of Claims 1 and 2, **characterized in that** the side walls (72) of the adapter cap (68) are connected to one another, between a joint part (80) and the clips (86), by transverse walls (88).

4. Wiper blade (10) according to one of the preceding claims, **characterized in that** the adapter cap (68) has, as a joint part, a transversely running hub (80) which, on its outer circumference facing the base element (28), has two depressions (82) into which centring cams (60) of the base element (28) engage.

5. Wiper blade (10) according to Claim 4, **characterized in that** the side parts (30, 32) have, in the region of the centring cams (60), lugs (58) which point towards one another and which, on the side facing towards the hub (80), have thrust points (62) via which, in the mounted state, a thrust web (84) which is provided on the hub (80) between the depressions (82) presses the lugs (58) against a top strip (18) of a wiper strip (12).

6. Wiper blade (10) according to one of the preceding claims, **characterized in that** the adapter cap (68) has, in its side walls (72) and symmetrically with respect to the hub (80) as viewed in the longitudinal direction (40), recesses (76) for an angled end (94) of a bridge (92) of a connecting element (90).

7. Wiper blade (10) according to Claim 6, **characterized in that** ribs (78) are provided in the recesses (76) of the adapter cap (68).

## Revendications

1. Balai d'essuie-glace (10) doté d'un élément de raccord (26) qui comporte un élément de base (28) et un élément d'articulation (68), l'élément de base (28) possédant une première partie latérale (30) et une deuxième partie latérale (32) qui sont assemblées transversalement par rapport à une direction longitudinale (40), par le fait que des moyens d'encliquetage (54, 56) et des moyens de centrage (46, 48, 50, 52) viennent en prise les uns dans les autres, et qui sont maintenues ensemble par des parois latérales (72) de l'élément d'articulation (68), **caractérisé en ce que** l'élément d'articulation (68) est un capuchon adaptateur (68) en plastique qui comprend des agrafes (86) sur les côtés intérieurs des ses parois latérales (72), lesquelles agrafes viennent en prise dans des renfoncements (66) sur les côtés longitudinaux extérieurs des parties latérales (30, 32) dans l'état monté.

2. Balai d'essuie-glace (10) selon la revendication 1, **caractérisé en ce que** les parties latérales (30, 32) comprennent des renforcements (64) dans la région des renfoncements (66), lesquels renforcements s'étendent à l'opposé des agrafes (86) et font saillie partiellement dans des évidements (73) des parois latérales (72) du capuchon adaptateur (68) au-dessus des agrafes (86).

3. Balai d'essuie-glace (10) selon la revendication 1 ou 2, **caractérisé en ce que** les parois latérales (72) du capuchon adaptateur (68) entre une partie d'articulation (80) et les agrafes (86) sont reliées l'une à l'autre par des parois transversales (88).

4. Balai d'essuie-glace (10) selon l'une quelconque des revendications précédentes, **caractérisé en ce que** le capuchon adaptateur (68) possède en tant que partie d'articulation un moyeu (80) s'étendant transversalement, lequel moyeu a, sur sa périphérie extérieure en direction de l'élément de base (28), deux cavités (82) dans lesquelles viennent en prise des ergots de centrage (60) de l'élément de base (28).

5. Balai d'essuie-glace (10) selon la revendication 4, **caractérisé en ce que** les parties latérales (30, 32) possèdent, dans la région des ergots de centrage (60), des pattes (58) tournées l'une vers l'autre qui ont des points de pression (62) du côté tourné vers le moyeu (80), au moyen desquels, dans l'état monté, une nervure de pression (84) qui est prévue entre les cavités (82) sur le moyeu (80) presse les pattes (58) contre une raclette de tête (18) d'une raclette de balai d'essuie-glace (12).

6. Balai d'essuie-glace (10) selon l'une quelconque des revendications précédentes, **caractérisé en ce que** le capuchon adaptateur (68) possède des renfoncements (76) dans ses parois latérales (72) de manière symétrique par rapport au moyeu (80) dans la direction longitudinale (40) pour une extrémité coudée (94) d'un pont (92) d'un élément de liaison (90).

7. Balai d'essuie-glace (10) selon la revendication 6, **caractérisé en ce que** des nervures (78) sont prévues dans les renfoncements (76) du capuchon adaptateur (68).
